# EUROPÄISCHE PATENTSCHRIFT

(11) **EP 2 446 406 B1**
(45) Veröffentlichungstag und Bekanntmachung des Hinweises auf die Patenterteilung: **28.09.2016**
(21) Anmeldenummer: 10818058.9
(22) Anmeldetag: 04.12.2010
(51) Int. Cl.: G05B 15/02, G06Q 10/04, H02J 13/00

(54) **VERFAHREN UND VORRICHTUNG ZUR ANALYSE DES ENERGIEEINSATZES BEIM BETRIEB EINES PRODUKTIONSSYSTEMS**
METHOD AND DEVICE FOR ANALYZING THE ENERGY USE DURING THE OPERATION OF A PRODUCTION SYSTEM
PROCÉDÉ ET DISPOSITIF PERMETTANT L'ANALYSE DE L'UTILISATION D'ÉNERGIE LORS DU FONCTIONNEMENT D'UN SYSTÈME DE PRODUCTION

(30) Priorität: 05.12.2009 DE 102009057143
(43) Veröffentlichungstag der Anmeldung: 02.05.2012
(73) Patentinhaber: Mehnert, Jens, 08468 Heinsdorfergrund (DE)
(72) Erfinder: Mehnert, Jens, 08468 Heinsdorfergrund (DE)
(74) Vertreter: Steiniger, Carmen
(86) Internationale Anmeldenummer: PCT/DE2010/001425
(87) Internationale Veröffentlichungsnummer: WO 2011/066823

(56) Entgegenhaltungen:
- ZEPPENFELD R: "ENERGIEMANAGEMENT", KUNSTSTOFFE, CARL HANSER VERLAG, MUNCHEN, DE, Bd. 87, Nr. 1, 1. Januar 1997 (1997-01-01) , Seiten 38-40, XP000640786, ISSN: 0023-5563 [gefunden am 2011-06-24]
- EGON MÜLLER: "Grundlagen energieeffizienter Fahrzeugproduktion aus wissenschaftlicher Sicht", 20110309, [Online] 9. März 2011 (2011-03-09), Seiten 1-67, XP007918954, Gefunden im Internet: URL:http://www.autouni.de/autouni_publish/ www/de/lehre/produktion/Aktuelle_Themen_au s_der_Fertigung_2011-1.contentliststandard .0023.file.tmp/autouni_download_blue_facto ry_emden_mueller_09-03-11.pdf> [gefunden am 2011-06-24]
- JAN RINGELSTEIN ET AL: "Netz- und marktkonformes bidirektionales Energiemanagement für Lasten und dezentrale Erzeuger im Niederspannungsnetz", 10. SYMPOSIUM ENERGIEINNOVATION,, [Online] 13. Februar 2008 (2008-02-13), Seiten 1-14, XP007918955, Gefunden im Internet: URL:http://www.iset.uni-kassel.de/abt/FB-A /publication/2008/2008_Graz_RJ_Bd_DN.pdf> [gefunden am 2011-06-24]
- Egon Müller, Jörg Engelmann, Thomas Löffler, Jörg Strauch: "Energieeffiziente Fabriken planen und betreiben", 1 January 2009 (2009-01-01), Springer Berlin Heidelberg, Berlin Heidelberg ISBN: 978-3-642-31945-7 DOI: 10.1007/978-3-540-89644-9,
- "Front page + index ED - Müller E; Engelmann J; Löffer T; Strauch J", 28 August 2009 (2009-08-28), ENERGIEEFFIZIENTE FABRIKEN PLANEN UND BETREIBEN, SPRINGER, DE, PAGE(S) 18PP, XP009187421, ISBN: 978-3-540-89643-2
- "6. Analyse und Bewertung des Energieverbrauchs ED - Müller E; Engelmann J; Löffer T; Strauch J", 28 August 2009 (2009-08-28), ENERGIEEFFIZIENTE FABRIKEN PLANEN UND BETREIBEN, SPRINGER, DE, PAGE(S) 255 - 286,FRONTPAGE,INDEX, XP009187426, ISBN: 978-3-540-89643-2

## Beschreibung

Die Erfindung betrifft ein Verfahren und eine Vorrichtung zur Analyse des Energieeinsatzes sowie der Energiekosten beim Betrieb eines Produktionssystems durch Analyse der Energiebedarfe zur Durchführung von Arbeitsaufträgen sowie zur Sicherstellung des Produktionsumfeldes im Rahmen versorgungstechnischer Einrichtungen sowie nachfolgender mehrstufiger Optimierung relevanter Parameter.

In jüngerer Zeit entsteht eine zunehmend wachsende Nachfrage nach Systemen, welche den Energieverbrauch und die Energiekosten von Produktionssystemen reduzieren helfen. So ist es seit langem bekannt, Stromzähler vorzusehen, welche den Energieverbrauch eines gesamten Systems erfassen. Diese Strommesseinrichtungen weisen jedoch den Nachteil auf, dass sie keinen Bezug zu dem tatsächlichen Produktionsablauf, den Umgebungsbedingungen oder der Strombezugszeit herstellen können. Eine Analyse aller in einem Produktionssystem vorhandenen und energetisch relevanten Verbrauchseinrichtungen bezüglich des genutzten Energieträgermediums, des zeitlich erforderlichen Energiebedarfs, einer zeitlichen und räumlichen Beziehung sowie eines Energieaustausches zwischen Produktionseinrichtungen und Gebäudeausrüstungen einschließlich einer Ermittlung geeigneter Energiespeicher oder Energiewandeleinrichtungen für überschüssige Energiemengen, wird bisher nicht umfassend durchgeführt oder in Form einer Verfahrensanweisung beschrieben.

Die Belegungsplanung von Maschinen wird üblicherweise durch Produktionsplanungs- und Produktionssteuerungssysteme unterstützt, die auf Grundlage einer Rückwärtsterminisierung eine Maschinenbelegungsplanung durchführen, wobei das oberste Optimierungsziel der Liefertermin und ein weiteres Belegungskriterium der Maschinenstundensatz ist. Die hierfür bekannten technischen Lösungen umfassen überwiegend umfangreiche Grund- und Erweiterungsoptionen zur Gestaltung kundenspezifischer Lösungen. Zusätzlich dienen Funktionen im Bereich einer serviceorientierten Architektur einer optimalen Verzahnung eingesetzter Module. Allerdings ist auch diesbezüglich eine Einbindung von Parametern des Energieverbrauchs in den Prozess nicht bekannt.

WO 2006 / 090 132 A3 beschreibt ein Verfahren zur Beurteilung der Energieeffizienz von Gebäuden. Es wird weder das im Gebäude befindliche Produktionssystem noch ein Energieaustausch zwischen Gebäudeausrüstungen und Produktionseinrichtungen berücksichtigt.

DE 10 2007 062 058 A1beschreibt ein Verfahren und eine Vorrichtung zur Analyse des Energieverbrauchs einer Maschine. Im Mittelpunkt steht dabei eine genaue Analyse von Maschinen, um diese hinsichtlich ihres Energieverbrauchs strukturieren und verbessern zu können. Eine über die Vorgänge einer Maschine hinausgehende Betrachtung von energetischen Verbrauchern erfolgt ebenso wenig wie eine zusammengeführte energetische Betrachtung von Maschinen und Gebäudeausrüstungen. ,

In dem Buch von Egon Müller, Jörg Engelmann, Thomas Löffler und Jörg Strauch "Energieeffiziente Fabriken planen und betreiben", Springer, ISBN: 978-3-540-89643-2 sind Ansätze zur Energieeffizienzsteigerung für die Fabrikplanung und den Fabrikbetrieb beschrieben. Gemäß den Autoren dieses Buches ist beim Planen und Betreiben von Fabriken die Erfassung, Aufbereitung und Bewertung von Energie- und Prozessdaten von besonderer Bedeutung. Mit den Energiemessungen können beispielsweise der Energiebedarf als Grundlage für die Energiebeschaffung überwacht werden und Möglichkeiten zur Minimierung des Energieeinsatzes aufgezeigt werden. Dabei soll das verwendete Energiemesssystem so strukturiert sein, dass es sowohl den physischen Fluss der Energie als auch die betrieblichen Organisationsstrukturen, wie Kostenstellen, berücksichtigt.

Das Messsystem kann ausgehend von der hierarchischen Ordnung der Fabrik nach dem Produktionsstandort, dem Fabrikgebäude, Produktionsbereichen, Fertigungs-/Montageplatzgruppen oder Fertigungs/Montageplätzen gegliedert werden. Dadurch ist beispielsweise eine energetische Gegenüberstellung der Verbräuche in einzelnen Fertigungshallen möglich. Ferner wird vorgeschlagen, den Anteil des Energieverbrauchs eine betrachteten Anlage am Gesamtverbrauch der Fabrik bzw. des Produktionsbereichs zu berücksichtigen. Zudem sollen neben dem Energieeinsatz die prozesszeit gemessen werden, um Aussagen zum energetischen Verhalten der produktionsanlage über die Zeit treffe zu können, und bedarfsorientiert Messungen der abgeführten Energie erfolgen, um auf energetische Reserven schließen und Möglichkeiten der Energierückgewinnung aufzeigen zu können.

Hierfür soll ein EDV-gestütztes Energiemanagementsystem zum Einsatz kommen, bei dem an verschiedenen Arbeitsplätzen vorgesehene Messwertaufnehmer in festgelegten Intervallen ein Messsignal erzeugen und über ein Netzwerk an eine Datenbank übermitteln, woraufhin eine Energiemanagementsoftware auf die Datenbank zugreift und die Aufbereitung der Messdaten ermöglicht.

Aufgabe der Erfindung ist es, ein Verfahren und eine Vorrichtung zur Analyse des Energieeinsatzes sowie der Energiekosten beim Betrieb eines Produktionssystems zu schaffen.

Die Aufgabe wird mit einem Verfahren gemäß Patentanspruch 1 gelöst, wobei vorteilhafte Ausgestaltungen als Unteransprüche benannt werden. Zur Durchführung des Verfahrens wird eine Vorrichtung gemäß Patentanspruch 9 vorgeschlagen.

In einem erfindungsgemäßen Verfahren zur Analyse des Energieeinsatzes sowie der Energiekosten beim Betrieb eines Produktionssystems bilden Maschinen und Versorgungstechnik mit einem ermittelbaren Energiebedarf sowie Planungseinrichtungen für die durch die Maschinen umzusetzenden Arbeitsaufträge die Elemente des Produktionssystems. Durch eine Energiesteuereinheit werden energetisch relevante Parameter der Maschinen, wie der Energiebedarf von Antrieben, bereitzustellende Mediendrücke oder Medienvolumenströme sowie einzustellende Temperaturen ermittelt und in repräsentative Lastkollektive gegliedert. Dabei wird als "Lastkollektiv" eine Klasse von Betriebszuständen einer Maschine verstanden, wobei diese Betriebszustände insbesondere durch eine aufgenommene elektrische Leistung mit zugeordneten Volumenströmen, Temperaturen, Drücken, Drehzahlen, Stromstärken und Frequenzen charakterisiert werden. Derartige Lastkollektive bilden nachfolgend die Grundlage, um ihnen medienabhängig durchschnittlich zu erwartende Energierückgewinnungswerte bezogen auf die jeweiligen Elemente zuordnen zu können.

Mit dem Begriff "Versorgungstechnik" werden im Rahmen der vorliegenden Erfindung insbesondere Heizungsanlagen, Anlagen zur Warmwasseraufbereitung, Klimatisierungseinrichtungen und Druckluftstationen bezeichnet.

Mit dem Begriff "medienabhängig" wird im Rahmen der vorliegenden Erfindung folgendes verstanden: Zum Betrieb von Maschinen wird sich unterschiedlichster Medien zur Bereitstellung oder Verbesserung gewünschte Funktionen bedient. Dabei kann eine Unterteilung in Elektrizität, flüssige oder gasförmige Medien vorgenommen werden. Das Medium Elektrizität ist durch die Parameter Spannung, Stromstärke, Leistung und Frequenz gekennzeichnet. Flüssige Medien werden durch die Parameter Druck, Volumenstrom, Dichte und Temperatur bestimmt. Im Rahmen der Erfindung erfolgt zusätzlich eine Betrachtung des flüssigen Stoffes in Bezug auf dessen Zusammensetzung (Zusatz von Ölen [bspw. bei Kühl-Schmierstoffen], Fungiziden [bspw. bei Kühl-Schmierstoffen, Kühlmitteln für elektrische Antriebe], Frostschutz [bspw. bei Kühlmitteln für elektrische Antriebe]) sowie dessen Filterfeinheit (Partikelgrößen abgestuft von 0,1 mm bis 10µm). Gasförmige Medien werden ebenfalls durch die Parameter Druck, Volumenstrom, Dichte und Temperatur bestimmt. Im Rahmen der Erfindung erfolgt zusätzlich eine Betrachtung des gasförmigen Stoffes in Bezug auf dessen Reinheit (Zusammensetzung), wobei ölnebelhaltige (bspw. Arbeitsraumabsaugung bei einer Maschine mit Kühl-Schmierstoffen), partikelhaltige (bspw. Arbeitsraumabsaugung bei einer Laser- oder Ausbrennmaschine für Stahlblech) oder wassernebelhaltige (bspw. Arbeitsraumabsaugung bei einer Waschmaschine) anzutreffen sind. Somit ist eine medienabhängige Beurteilung des energetischen Potentials (vgl. Parameter) im Betrachtungsgebiet allein nicht ausreichend. Erst die Zusammensetzung gibt Aufschluss über technisch sinnvolle Möglichkeiten einer geeigneten energetischen Nutzung (Wärmeaustausch, Wärmespeicherung, Umkehrbarkeit von Funktionen im Sinne von Rückspeisung).

Eine Planungseinrichtung stellt die periodenbezogen umzusetzenden Arbeitsaufträge bereit. Anschließend können auf dieser Grundlage die jeweiligen Zeitanteile der Lastkollektive periodenabhängig für Arbeitsauftrag und Maschinenkombinationen bestimmt werden, woraus die Energiesteuereinheit den Energiebedarf jeder geeigneten Maschine zur Umsetzung eines Arbeitsauftrages ermitteln kann.

Als vorteilhafte Ausgestaltung wird vorgeschlagen, dass die Energiesteuereinheit die ermittelten Energiebedarfe jeder Maschine zur Umsetzung eines Arbeitsauftrages speichert und daraus eine Prioritätsreihenfolge in Form eines Vorzugsgraphen entsprechend den jeweils berechneten Energieaufwänden bildet.

Dabei wird mit dem Begriff "Vorzugsgraph" im Rahmen der vorliegenden Erfindung folgendes verstanden: Aus dem Stand der Technik geht hervor, dass in der Regel mindestens zwei Kriterien zur Festlegung des Arbeitsplatzes zur Umsetzung eines Arbeitsauftrages durch eine Steuereinheit berücksichtigt werden. Dabei kann der Anwender in der Regel diese Kriterien mit Gewichtungen versehen (beispielsweise 70 % Liefertermintreue, 30 % Maschinenstundensatz). Der auf dieser Grundlage stattfindende Optimierungslauf eines ERP/ PPS- Systems erzeugt auf dieser Grundlage eine Zuordnung von Arbeitsplätzen für einen Arbeitsauftrag. Diese Zuordnung kann als Vorzugsgraph bezeichnet werden (Ergebnis einer mehrkriteriellen Optimierung). Die Erfindung bindet zusätzlich den Parameter "Energieverbrauch" ein. Dadurch besitzt das Optimierungsergebnis, der Vorzugsgraph, auch eine Einbindung des Energieverbrauchs bei der Zusammenführung von Maschinen zu den Prozessschritten im Arbeitsauftrag. Im Ergebnis entsteht als betriebliches Dokument ein Arbeitsplan. Ein Arbeitsplan beschreibt den Durchlauf eines Produktes vom Rohmaterial über verschiedene Arbeitsvorgänge und Fertigungseinrichtungen bis hin zum fertigen Produkt. Für jeden Arbeitsvorgang werden die Details der Tätigkeiten in den maschinellen Einrichtungen spezifiziert und oftmals mit weiteren organisatorischen Informationen ergänzt, wie die veranschlagten Rüstzeiten, Stückzeiten, den Fertigungskostenstellen und Fertigungseinrichtungen. Er nennt auch zu verwendende Arbeitsmittel und Material wie Messmittel, Vorrichtungen und Sonderwerkzeuge. Im Gegensatz zur Stückliste, die dokumentiert woraus ein neues Teil (als allgemeiner Begriff für Einzelteil, Baugruppe und Erzeugnis) hergestellt wird, dokumentiert der Arbeitsplan die Arbeitsschritte zur Fertigung des Produkts. Arbeitsplan und Stückliste sind aber in dem Sinne gekoppelt, als für jeden Arbeitsvorgang des Arbeitsplans auf die Menge der benötigten Rohmaterialien, Halbzeuge oder Baugruppen und deren allfälligen Stücklistenspezifikationen Bezug genommen wird.

Der Vorzugsgraph wird an die Planungseinrichtung übermittelt, welche die derart abgebildeten Energiebedarfe kostenseitig bewertet und nachfolgend die Zuordnung der Arbeitsaufträge zu den Maschinen unter Nutzung der Energiebedarfe vornimmt. Es besteht die Vorgabe, die Arbeitsaufträge der Maschine zuzuordnen, welche den kleinsten Wert für den Energiebedarf im Vergleich zu anderen Maschinen aufweist. Weiterhin übernimmt die Energiesteuereinheit die kostenseitige Bewertung einschließlich der nachfolgenden Auftragszuordnung, wodurch lediglich die derart ermittelten Werte an Planungseinrichtungen des Produktionssystems zu übertragen sind.

In weiterer Ausgestaltung des Verfahrens ist vorgesehen, dass die Energiekosten je Periode und Medium bestimmt und die Abarbeitungsreihenfolge der Arbeitsaufträge daraufhin so vorgenommen wird, dass energieintensive Arbeitsaufträge in Perioden mit niedrigen Energiekosten eingeordnet werden.

Eine weitere vorteilhafte Ausgestaltung sieht vor, dass durch eine Energiesteuereinheit oder eine Planungseinrichtung Perioden mit energieintensiven Arbeitsaufträgen bestimmt werden. Anschließend erfolgt mit einer Energieplanungseinheit ein periodenabhängiger Energiekostenabgleich, in dessen Ergebnis die Energiesteuereinheit oder eine Planungseinrichtung die zeitliche Abarbeitungsreihenfolge dieser Arbeitsaufträge in der Art vornimmt, dass die energieintensiven Arbeitsaufträge in Perioden mit niedrigen Energiekosten gelegt werden.

Es werden die zu erwartende Energiebilanz je Periode für die Maschinen und Versorgungstechnik sowie die prognostizierbaren Werte für die Energiebedarfe für Überbeziehungsweise Unterdeckungsperioden bestimmt und daraus wird eine medienabhängige Verbindungsstruktur der Maschinen untereinander sowie von Maschinen und Versorgungstechnik festgelegt. Auf dieser Grundlage erfolgt eine Überprüfung, ob bei Nutzung der ermittelten Verbindungsstruktur die zu erwartenden Werte für die Energiebedarfe für Über- beziehungsweise Unterdeckungsperioden um mehr als fünf Prozent differieren. Bei Feststellung, dass eine Differenz von mehr als fünf Prozent zu erwarten ist, werden zusätzliche medienspezifische Energiespeichereinheiten bestimmt und in die Anordnungsverhältnisse mit minimalen Längen zur Medienübertragung eingebunden. Weiterführend wird durch die Energiesteuereinheit außentemperaturabhängig der Energiebedarf der Versorgungstechnik je Medium und Periode bestimmt sowie die Energieüberschüsse je Medium und Periode aus der Abarbeitungsreihenfolge der Arbeitsaufträge je Maschine ermittelt und ein medienspezifischer Energieaustausch zwischen den Maschinen sowie den Maschinen und der Versorgungstechnik in der Art vorgenommen, dass der Gesamtenergiebedarf des Produktionssystems minimal wird.

Weiterhin ist vorgesehen, dass durch die Energiesteuereinheit der außentemperaturabhängige Energiebedarf der Versorgungstechnik je Medium und Periode bestimmt wird sowie die Energieüberschüsse je Medium und Periode aus der vorab geplanten Abarbeitungsreihenfolge der Arbeitsaufträge je Maschine ermittelt werden und diese vorab geplante Abarbeitungsreihenfolge in der Art korrigiert wird, dass der Gesamtenergiebedarf des Produktionssystems minimal wird.

Die erfindungsgemäße Vorrichtung umfasst eine Energiesteuereinheit, die mit den Elementen des Produktionssystems in Verbindung steht, Zustandsdaten dieser Elemente kontinuierlich erfasst und mit einer Planungseinrichtung und/oder einer Energieplanungseinheit verbunden ist. Diese Verbindungen erfolgen drahtlos und/oder über ein internes Netzwerk und/oder das Internet. Ebenso können die Elemente des Produktionssystems nach einem von der Energiesteuereinheit ausgegebenen Schema verbunden und diese Verbindungen durch die Energiesteuereinheit mit Hilfe von Absperreinrichtungen getrennt werden.

Der Vorteil der Erfindung besteht im Wesentlichen darin, dass eine ganzheitliche Energiebilanz für das Produktionssystem unter Beachtung der jeweiligen Auslastungssituation erstellt und durch einen mehrstufigen Verfahrensablauf der erforderliche Energieaufwand zuerst verringert, dann verlagert, nachfolgend gespeichert und erst abschließend in eine andere Energieform umgewandelt wird. Es erfolgt eine Einbindung energetischer Verbrauchsparameter in das Scheduling für die Reihenfolgebildung für die abzuarbeitenden Arbeitsaufträge sowie in die Planungsvorgaben für die Schichtbelegung. Diese Funktionen, die bei den derzeit verfügbaren ERP-Systemen nicht vorhanden sind, ermöglichen den Anwendern erstmals die Einbindung von Energieverbrauchsdaten in den Auswahlprozess zur Festlegung des Arbeitsplatzes (welche Maschine den Arbeitsauftrag umsetzen soll) und in der Folge eine aufwandsarme Verringerung des Energieverbrauches sowie der Energiebezugskosten.

Für eine Umsetzung werden vordergründig die vorhandenen Elemente des Produktionssystems in einer vorteilhaften Weise miteinander verknüpft. Die Erfindung kann beispielsweise zur Senkung des Energieverbrauches und der Energiebezugskosten für Produktionssysteme im Maschinenbau oder der Kraftfahrzeugindustrie genutzt werden.

Nachfolgend wird ein Ausführungsbeispiel der Erfindung unter Bezugnahme auf die Zeichnung erläutert. Es zeigen:
- Fig. 1: ein erstes Ausführungsbeispiel einer Vorrichtung zur Durchführung des erfindungsgemäßen Verfahrens
- Fig. 2: den Ablauf der Informationsgewinnung, -verarbeitung und -ausgabe zwischen den Elementen eines Produktionssystems gemäß einer bevorzugten Ausführungsform

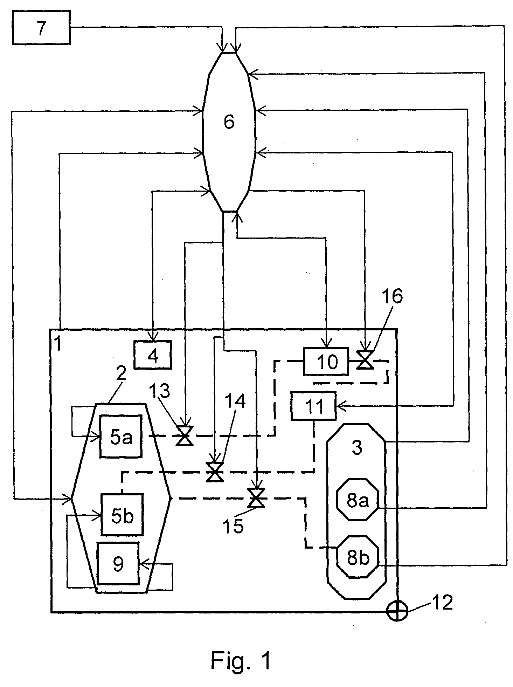

Figur 1 zeigt den beispielhaften Aufbau der Vorrichtung in einem ersten Ausführungsbeispiel. Darin stellen die durchgehend dünn gezeichneten Linien Daten- beziehungsweise Steuerleitungen und die dicker gezeichneten unterbrochenen Linien Medienleitungen dar.

Die Vorrichtung betrifft ein Produktionssystem 1, bestehend aus einer Maschine 2 (zum Beispiel eine Drehmaschine), Versorgungstechnik 3 (beispielsweise eine Heizungsanlage mit Luftschleiersystem an den Hallentoren), einer Planungseinrichtung 4, einer Energiespeichereinheit 10 (zum Beispiel ein Warmwasserboiler) und einer Energiewandeleinrichtung 11 (beispielsweise eine Wärmepumpe).

Die Maschine 2 weist eine Temperierungseinrichtung 5a und eine Temperierungseinrichtung 5b sowie eine Antriebseinrichtung 9 (beispielsweise ein Elektromotor) auf. Die Versorgungstechnik 3 weist eine Temperierungseinrichtung 8a und eine Temperierungseinrichtung 8b auf. Die Temperierungseinrichtung 5a der Maschine 2 ist durch eine Medienleitung, in welche das Absperrventil 13 eingebunden ist, mit der Energiespeichereinheit 10 verbunden. Die Temperierungseinrichtung 5b der Maschine 2 ist durch eine Medienleitung, in welche das Absperrventil 14 eingebunden ist, mit der Energiewandeleinrichtung 11 verbunden. Die Maschine 2 ist durch eine Medienleitung, in welche das Absperrventil 15 eingebunden ist, mit der Temperierungseinrichtung 8b der Versorgungstechnik 3 verbunden. Die Energiespeichereinheit 10 ist durch eine Medienleitung, in welche das Absperrventil 16 eingebunden ist, mit der Energiewandeleinrichtung 11 verbunden. Der Referenzpunkt 12 befindet sich im unteren Bereich des Produktionssystems 1. Die Energiesteuereinheit 6 ist mit Hilfe von Datenleitungen beziehungsweise Steuerleitungen mit dem Produktionssystem 1, der Maschine 2, der Versorgungstechnik 3, der Planungseinrichtung 4, der Temperierungseinrichtung 8a und der Temperierungseinrichtung 8b der Versorgungstechnik 3, der Energiespeichereinheit 10, der Energiewandeleinrichtung 11, der Energieplanungseinheit 7 (z.B. die Energiekontrolleinrichtung eines Kraftwerkes) sowie den Absperrventilen 13 bis 16 verbunden. Die Temperierungseinrichtungen 5a und 5b sowie die Antriebseinrichtung 9 sind mit der nicht dargestellten Steuerung der Maschine 2 verbunden.

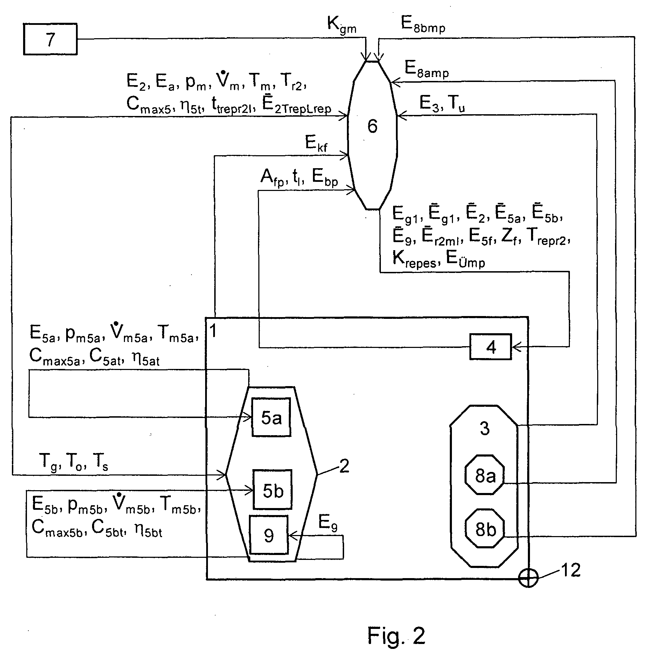

In Fig. 2 ist eine vorteilhafte Verfahrensweise dargestellt. Nach dem Auslösen einer Anforderung zur Durchführung der erfindungsgemäßen Verfahrensweise zur Analyse des Energieeinsatzes sowie der Energiekosten beim Betrieb eines Produktionssystems 1 durch eine wie oben beschriebene Vorrichtung, bilden eine Maschine 2, Versorgungstechnik 3 mit einem ermittelbaren Energiebedarf sowie eine Planungseinrichtung 4 zur Beschreibung und Optimierung der durch die Maschine 2 umzusetzenden Arbeitsaufträge die Elemente des Produktionssystems 1. Durch eine Energiesteuereinheit 6 werden energetisch relevante und einstellbare Parameter der Maschine 2, wie der Energiebedarf der Antriebseinrichtung 9, bereitzustellende Mediendrücke oder Medienvolumenströme sowie einzustellende Temperaturen der Temperierungseinrichtungen 5a und 5b ermittelt und in repräsentative Lastkollektive gegliedert. Diese Lastkollektive bilden nachfolgend die Grundlage, um ihnen medienabhängig durchschnittlich zu erwartende Energierückgewinnungswerte zuordnen zu können. Die Planungseinrichtung 4 stellt die periodenbezogen umzusetzenden Arbeitsaufträge bereit. Anschließend können auf dieser Grundlage die jeweiligen Zeitanteile der Lastkollektive periodenabhängig für Arbeitsauftrag und Maschinenkombinationen bestimmt werden, woraus die Energiesteuereinheit 6 den Energiebedarf der Maschine 2 zur Umsetzung eines Arbeitsauftrages ermittelt.

Durch den nächsten Verfahrensschritt werden repräsentative Arbeitsraumtemperaturen der Maschine 2 in Abhängigkeit der Umgebungstemperatur und unter Einbeziehung der jeweiligen Nutzungsbedingungen ermittelt sowie untere und obere Temperaturgrenzwerte vorgegeben. Auf der Grundlage dieser repräsentativen Arbeitsraumtemperaturen werden die jeweiligen Temperaturvorgaben als einzustellende Sollwerte für die Temperierungseinrichtungen 5a und 5b der Maschine 2 in der Art bestimmt, dass eine minimale Temperaturdifferenz zwischen Umgebungstemperatur und Arbeitsraumtemperatur der Maschine 2 einzustellen ist.

Der nächste Verfahrensschritt ist dadurch gekennzeichnet, dass durch die Energiesteuereinheit 6 der erforderliche maschinenspezifische Energiebedarf beim Betrieb des Produktionssystems 1 für häufig auftretende Lastkollektive bis zum Erreichen der vorgegebenen repräsentativen Arbeitsraumtemperatur in Abhängigkeit der Umgebungstemperatur sowie die durchschnittlich erforderlichen maschinenspezifischen Energiebedarfe mit erreichter repräsentativer Arbeitsraumtemperatur für häufig auftretende Lastkollektive bestimmt und an die Planungseinrichtung 4 übertragen werden. Aus diesen maschinenspezifischen Energiebedarfen ermittelt dann die Planungseinrichtung 4 die zeitliche Abarbeitungsreihenfolge von Arbeitsaufträgen innerhalb vorgegebener Perioden für die Maschine 2, bei welcher der Energiebedarf minimal ist.

Innerhalb des nächsten Verfahrensschrittes wird ein Referenzpunkt 12 im Produktionssystem 1 festgelegt, um die geometrischen Anordnungsverhältnisse der Maschine 2 und der Versorgungstechnik 3 zu bestimmen. Anschließend werden die zu erwartende Energiebilanz je Periode für die Maschine 2 und die Versorgungstechnik 3 sowie die prognostizierbaren Werte für die Energiebedarfe für Über- beziehungsweise Unterdeckungsperioden bestimmt. Im Ergebnis wird eine medienabhängige Verbindungsstruktur gebildet, welche die Maschine 2 mit der Temperierungseinrichtung 8b durch eine Medienleitung mit einem Absperrventil 15 verbindet und die Temperierungseinrichtung 5a der Maschine 2 durch eine Medienleitung, in welche das Absperrventil 13 eingebunden ist, mit der Energiespeichereinheit 10 zusammenführt sowie die Temperierungseinrichtung 5b der Maschine 2 durch eine Medienleitung, in welche das Absperrventil 14 eingebunden ist, mit der Energiewandeleinrichtung 11 verbindet. Die Energiespeichereinheit 10 steht durch eine Medienleitung, in welche das Absperrventil 16 eingebunden ist, mit der Energiewandeleinrichtung 11 in Verbindung.

Auf dieser Grundlage erfolgt durch die Energiesteuereinheit 6 eine Überprüfung, ob bei Nutzung der beschriebenen Verbindungsstruktur die zu erwartenden Werte für die Energiebedarfe für Über- beziehungsweise Unterdeckungsperioden um mehr als fünf Prozent differieren. Für derartige Verhältnisse wurde eine zusätzliche medienspezifische Energiespeichereinheit 10 bestimmt und in die Anordnungsverhältnisse mit einer minimalen Länge der Medienleitung eingebunden. Weiterführend wird durch die Energiesteuereinheit 6 außentemperaturabhängig der Energiebedarf der Versorgungstechnik 3 je Medium und Periode bestimmt sowie die Energieüberschüsse je Medium und Periode aus der Abarbeitungsreihenfolge der Arbeitsaufträge der Maschine 2 ermittelt und ein medienspezifischer Energieaustausch zwischen der Maschine 2 und der Versorgungstechnik 3 so vorgenommen, dass der Gesamtenergiebedarf des Produktionssystems 1 minimal wird.

Der darauf folgende Verfahrensschritt ist dadurch gekennzeichnet, dass durch die Energiesteuereinheit 6 der außentemperaturabhängige Energiebedarf der Versorgungstechnik 3 je Medium und Periode bestimmt sowie die Energieüberschüsse je Medium und Periode aus der vorab geplanten Abarbeitungsreihenfolge der Arbeitsaufträge der Maschine 2 ermittelt und diese vorab geplante Abarbeitungsreihenfolge in der Art korrigiert wird, dass sich der Gesamtenergiebedarf des Produktionssystems 1 minimiert.

Für das Produktionssystem 1 werden durch die Energiesteuereinheit 6 periodenbezogen repräsentative Auslastungsklassen aus den Lastkollektiven unter Beachtung deren zeitlichen Anteils je Periode gebildet und diesen Auslastungsklassen medienabhängige Energieüberschüsse zugeordnet sowie nachfolgend aus den derart ermittelten Energieüberschüssen die zu erwartenden periodenabhängigen Werte für die maximale Energierückspeisung je Medium bestimmt. Anschließend wird durch die Energiesteuereinheit 6 ein Energiebilanzwert in Form eines Differenzwertes zwischen den zu erwartenden medienabhängigen Energieüberschüssen und den Werten für die maximale Energierückspeisung gebildet. Die Bewertung erfolgt in der Art, dass durch die Energiesteuereinheit 6 die Bestimmung des Kostenpotentials für den verbleibenden Energiebilanzwert durch Abfrage bei der Energieplanungseinheit 7 durchgeführt wird. Daraufhin ist eine Energiewandeleinrichtung 11 ermittelt und in die medienabhängige Verbindungsstruktur eingebunden worden.

### Bezugszeichenliste

- 1: Produktionssystem
- 2: Maschine
- 3: Versorgungstechnik
- 4: Planungseinrichtung
- 5a: Temperierungseinrichtung der Maschine
- 5b: Temperierungseinrichtung der Maschine
- 6: Energiesteuereinheit
- 7: Energieplanungseinheit
- 8a: Temperierungseinrichtung der Versorgungstechnik
- 8b: Temperierungseinrichtung der Versorgungstechnik
- 9: Antriebseinrichtung einer Maschine
- 10: Energiespeichereinheit
- 11: Energiewandeleinrichtung
- 12: Referenzpunkt
- 13: Absperrventil der Medienleitung zwischen Temperierungseinrichtung der Maschine 5a und Energiespeichereinheit 10
- 14: Absperrventil der Medienleitung zwischen Temperierungseinrichtung der Maschine 5b und Energiewandeleinrichtung 11
- 15: Absperrventil der Medienleitung zwischen Maschine 2 und Temperierungseinrichtung der Versorgungstechnik 8b
- 16: Absperrventil der Medienleitung zwischen Energiespeichereinheit 10 und Energiewandeleinrichtung 11
- A: Arbeitsauftrag
- A_{fp}: Arbeitsaufträge (f) für Periode (p)
- E: Energiebedarf
- E_{gs}: Gesamtenergiebedarf (g) eines Produktionssystems (s)
- E̅_{gs}: Gemittelter Gesamtenergiebedarf (g) eines Produktionssystems (s)
- Eₖ: Energiebedarf einer Maschine (k)
- E̅ₖ: Gemittelter Energiebedarf einer Maschine (k)
- E̅_{kTrepLrep}: Gemittelter Energiebedarf einer Maschine (k) bei repräsentativer Arbeitsraumtemperatur (Tᵣₑₚ) und repräsentativen Lastkollektiven (Lᵣₑₚ)
- Eₐ: Energiebedarf eines Antriebes (a)
- Eₐ: Gemittelter Energiebedarf eines Antriebes (a)
- E_{kf}: Energiebedarf einer Maschine (k) zur Umsetzung des Arbeitsauftrages (f)
- Eₕ: Energiebedarf der Versorgungstechnik (h)
- Eₕₘₚ: Energiebedarf der Versorgungstechnik (h) je Medium (m) und Periode (p)
- E_{bp}: Energiebilanz (b) für Periode (p)
- Eᵣₖₘₗ: Gemittelter Energierückgewinnungswert (r) einer Maschine (k) für Medium (m) und Lastkollektiv (I)
- E_{Ükmp}: Energieüberschuss einer Maschine (k) für Medium (m) und Periode (p)
- pₘ: Druck des Mediums (m)
- Vₘ: Volumenstrom des Mediums (m)
- L: Lastkollektiv
- Lᵣₑₚ: Repräsentatives (rep) Lastkollektiv
- tₗ: Zeitanteil für Lastkollektiv (I)
- tₜᵣₑₚᵣₖₗ: Zeitanteil (t) bis zum Erreichen der repräsentativen (rep) Arbeitsraumtemperatur (r) einer Maschine (k) für Lastkollektiv (I)
- Tₘ: Temperatur des Mediums (m)
- Tᵣₖ: Arbeitsraumtemperatur (r) einer Maschine (k)
- Tᵣₑₚᵣₖ: Repräsentative (rep) Arbeitsraumtemperatur (r) einer Maschine (k)
- Tᵤ: Umgebungstemperatur (u)
- T_{g}: Unterer Temperaturgrenzwert (g)
- Tₒ: Oberer Temperaturgrenzwert (o)
- Tₛ: Temperatursollwert (s)
- T_{erwT}: Erwartete (erw) Außentemperatur (T)
- C: Energiespeicherkapazität
- Cₘₐₓ: Maximale Energiespeicherkapazität
- C_{gt}: Energiespeicherkapazität einer Energiespeichereinrichtung (g) für Zeitraum (t)
- □_{bt}: Wirkungsgrad einer Energiespeichereinrichtung (g) für Zeitraum (t)
- K_{gm}: Energiekosten für Periode (p) und Medium (m)
- Z_{f}: Abarbeitungsreihenfolge für Arbeitsauftrag (f)
- Kᵣₑₚₑₛ: Repräsentative (rep) Auslastungsklasse (e) für ein Produktionssystem (s)

## Patentansprüche

1. Verfahren zur Verringerung des Energieeinsatzes beim Betrieb eines Produktionssystems (1), bestehend aus Maschinen (2) und Versorgungstechnik (3) mit einem ermittelbaren Energiebedarf sowie Planungseinrichtungen (4) für die durch die Maschinen (2) umzusetzenden Arbeitsaufträge,
durch eine mit den Elementen des Produktionssytems (1) mit Hilfe von Daten- oder Steuerleitungen in Verbindung stehende Energiesteuereinheit (6) energetisch relevante Parameter der Maschinen (2) ermittelt und in repräsentative Lastkollektive, welche Klassen von Betriebszuständen der Maschinen (2) sind, gegliedert werden,
diesen Lastkollektiven medienabhängig durchschnittlich zu erwartende Energierückgewinnungswerte zugeordnet werden, wobei die Medien Elektrizität, flüssige oder gasförmige Medien sind,
die Energiesteuereinheit (6) mit einer Planungseinrichtung (4) des Produktionssystems (1) und/oder einer Energiekontrolleinrichtung eines Kraftwerks drahtlos und/oder über ein internes Netzwerk und/oder das Internet verbunden ist und durch die Planungseinrichtung (4) die jeweiligen Zeitanteile der Lastkollektive periodenabhängig für Arbeitsauftrag und Maschinenkombination bestimmt werden, **dadurch gekennzeichnet,**
**dass** die Elemente des Produktionssystems (1) nach einem von der Energiesteuereinheit (6) ausgegebenen Schema verbunden und diese Verbindungen durch die Energiesteuereinheit (6) mit Hilfe von Absperreinrichtungen getrennt werden,
die Energiesteuereinheit (6) aus den jeweiligen Zeitanteilen der Lastkollektive, die periodenabhängig für Arbeitsauftrag und Maschinenkombination bestimmt werden, den Energiebedarf jeder geeigneten Maschine zur Umsetzung eines Arbeitsauftrages ermittelt, und
die Energiesteuereinheit (6) und/oder die Planungseinrichtung (4) die Arbeitsaufträge der Maschine (2) zuordnet, welche den kleinsten Wert für den Energiebedarf im Vergleich zu anderen Maschinen (2) aufweist.

2. Verfahren nach Anspruch 1, **dadurch gekennzeichnet, dass** als energetisch relevante Parameter der Maschinen (2) der Energiebedarf von Antrieben, bereitzustellende Mediendrücke oder Medienvolumenströme sowie einzustellende Temperaturen ermittelt werden.

3. Verfahren nach Anspruch 1 oder 2, **dadurch gekennzeichnet, dass** die Energiesteuereinheit (6) die ermittelten Energiebedarfe je Maschine (2) zur Umsetzung eines Arbeitsauftrages speichert und daraus eine Prioritätsreihenfolge entsprechend den jeweils berechneten Energieaufwänden bildet.

4. Verfahren nach wenigstens einem der vorhergehenden Ansprüche, **dadurch gekennzeichnet, dass**
durch die Energiesteuereinheit (6) oder die Planungseinrichtung (4) Perioden mit energieintensiven Arbeitsaufträgen des Produktionssystems (1) bestimmt werden, mit einer Energieplanungseinheit (7) ein periodenabhängiger Energiekostenabgleich durchgeführt wird, und
daraufhin die Energiesteuereinheit (6) oder die Planungseinrichtung (4) die zeitliche Abarbeitungsreihenfolge der Arbeitsaufträge so steuert, dass die energieintensiven Arbeitsaufträge in Perioden mit niedrigen Energiekosten gelegt werden.

5. Verfahren nach wenigstens einem der vorhergehenden Ansprüche, **dadurch gekennzeichnet, dass** durch die Energiesteuereinheit (6) der außentemperaturabhängige Energiebedarf der Versorgungstechnik (3) je Medium und Periode bestimmt, Energieüberschüsse je Medium und Periode aus einer vorab geplanten Abarbeitungsreihenfolge der Arbeitsaufträge je Maschine (2) ermittelt und ein medienspezifischer Energieaustausch zwischen den Maschinen (2) und/oder den Maschinen (2) und der Versorgungstechnik (3) in der Art vorgenommen wird, dass der Gesamtenergiebedarf des Produktionssystems (1) minimal wird.

6. Verfahren nach wenigstens einem der vorhergehenden Ansprüche, **dadurch gekennzeichnet, dass** durch die Energiesteuereinheit (6) der außentemperaturabhängige Energiebedarf der Versorgungstechnik (3) je Medium und Periode bestimmt, Energieüberschüsse je Medium und Periode aus einer vorab geplanten Abarbeitungsreihenfolge der Arbeitsaufträge je Maschine (2) ermittelt und diese vorab geplante Abarbeitungsreihenfolge der Arbeitsaufträge in der Art korrigiert, dass der Gesamtenergiebedarf des Produktionssystems (1) minimal wird.

7. Verfahren nach wenigstens einem der vorhergehenden Ansprüche, **dadurch gekennzeichnet, dass** durch die Energiesteuereinheit (6) eine Überprüfung erfolgt, ob bei Nutzung der Verbindungen der Elemente des Produktionssystems (1) die zu erwartenden Werte für die Energiebedarfe für Über- beziehungsweise Unterdeckungsperioden um mehr als fünf Prozent differieren, für derartige Verhältnisse eine zusätzliche medienspezifische Energiespeichereinheit (10) bestimmt und in die Anordnungsverhältnisse mit einer minimalen Länge der Medienleitung eingebunden wird.

8. Verfahren nach Anspruch 7, **dadurch gekennzeichnet, dass** die Energiespeichereinheit (10) mit einer Energiewandeleinrichtung (11) verbunden ist, in welcher die gespeicherte Energie in eine andere Energieform umgewandelt wird.

9. Vorrichtung zur Durchführung eines Verfahrens nach wenigstens einem der vorhergehenden Ansprüche zur Verringerung des Energieeinsatzes beim Betrieb eines Produktionssystems (1), das aus Maschinen (2) und Versorgungstechnik (3) mit einem ermittelbaren Energiebedarf sowie Planungseinrichtungen (4) für die durch die Maschinen (2) umzusetzenden Arbeitsaufträge besteht, wobei die Vorrichtung eine Energiesteuereinheit (6) aufweist, die mit den Elementen des Produktionssystems (1) mit Hilfe von Daten- oder Steuerleitungen in Verbindung steht, mit der Energiesteuereinheit (6) energetisch relevante Parameter der Maschinen (2) kontinuierlich erfassbar und repräsentativen Lastkollektiven, welche Klassen von Betriebszuständen der Maschinen (2) sind, zuordenbar sind, diesen Lastkollektiven medienabhängig durchschnittlich zu erwartende Energierückgewinnungswerte zugeordnet sind, wobei die Medien Elektrizität, flüssige oder gasförmige Medien sind, und die Energiesteuereinheit (6) mit einer Planungseinrichtung (4) des Produktionssystems (1) und/oder einer Energiekontrolleinrichtung eines Kraftwerks drahtlos und/oder über ein internes Netzwerk und/oder das Internet verbunden,
**dadurch gekennzeichnet, dass** die Elemente des Produktionssystems (1) nach einem von der Energiesteuereinheit (6) ausgegebenen Schema verbindbar und diese Verbindungen
durch die Energiesteuereinheit (6) mit Hilfe von Absperreinrichtungen trennbar sind,
mit der Energiesteuereinheit (6) aus den jeweiligen Zeitanteilen der Lastkollektive, die periodenabhängig für Arbeitsauftrag und Maschinenkombination bestimmt werden, der Energiebedarf jeder geeigneten Maschine zur Umsetzung eines Arbeitsauftrages ermittelbar ist, und
durch die Energiesteuereinheit (6) und/oder die Planungseinrichtung (4) die Arbeitsaufträge der Maschine (2) zuordenbar sind, welche den kleinsten Wert für den Energiebedarf im Vergleich zu anderen Maschinen (2) aufweist.

10. Vorrichtung nach Anspruch 9, **dadurch gekennzeichnet, dass** die Maschinen (2) und die Versorgungstechnik (3) durch Absperrventile (13, 15) aufweisende Medienleitungen miteinander unter Ausbildung einer medienabhängigen Verbindungsstruktur miteinander verbunden sind.

11. Vorrichtung nach Anspruch 10, **dadurch gekennzeichnet, dass** für Verhältnisse, bei welchen bei Nutzung der Verbindungen der Elemente des Produktionssystems (1) die zu erwartenden Werte für die Energiebedarfe für Über- beziehungsweise Unterdeckungsperioden um mehr als fünf Prozent differieren, eine zusätzliche medienspezifische Energiespeichereinheit (10) bestimmt und in die Anordnungsverhältnisse mit einer minimalen Länge der Medienleitung eingebunden ist.

12. Vorrichtung nach Anspruch 10 oder 11, **dadurch gekennzeichnet, dass** in die medienabhängige Verbindungsstruktur eine Energiewandeleinrichtung (11) eingebunden ist.

## Claims

1. Method for reduction of energy input during operation of a production system (1) consisting of machines (2) and supply equipment (3) with a determinable energy demand and energy planning units (4) for work orders to be implemented in the machines (2),
determining energy relevant parameters of the machines (2) by an energy control unit (6) being in contact by means of data lines or control lines with the elements of the production system (1) and these are classified into representative load spectra being classes of operating states of the machines (2),
on average expected energy recovery values are assigned to these load spectra media-dependently, wherein the media are electricity, liquid or gaseous media,
the energy control unit (6) is connected with an energy planning unit (4) of the production system (1) and/or a energy control unit of a power station wirelessly and/or by an internal network and/or the internet, and
the respective time units of the load spectra are determined based on time periods for work order and machine combination by the planning unit (4),
**characterized in that**
the elements of the production system (1) are connected according to a scheme generated by the energy control unit (6) and these connections are separated by the energy control unit (6) by means of isolating equipments,
the energy control unit (6) determines the energy needs of each appropriate machine for implementing a work order by the respective time units of the load spectra, which are determined based on time periods for work order and machine combination, and the energy control unit (6) and/or the planning unit (4) assigns the work orders of the machine (2), which shows lowest energy needs value in comparison to other machines (2).

2. Method according to claim 1, **characterized in that** as energy-relevant parameters of the machines (2), the energy needs of drives, media pressures to be provided or media volume streams as well as temperatures to be set are determined.

3. Method according to claim 1 or 2, **characterized in that** the energy control unit (6) stores the determined energy needs of each machine (2) to implement a work order and from this constructs a priority sequence in accordance with the respectively calculated energy needs.

4. Method according to at least one of the preceding claims, **characterized in that** the energy control unit (6) or the planning unit (4) determines periods with energy-intensive work orders of the production system (1), a period-dependent energy cost comparison is performed by an energy planning unit (7), and
thereafter the energy control unit (6) or the planning unit (4) controls the time-related sequence of the work orders such that the energy-intensive work orders are performed in periods with low energy costs.

5. Method according to at least one of the preceding claims, **characterized in that** the energy control unit (6) determines the energy needs dependent upon outdoor temperatures of the supply equipment (3) for each medium and period, determines excess energy for each medium and period from a previously planned sequence of execution of the work orders for each machine (2) and provides a media-specific energy exchange between the machines (2) and/or the machines (2) and the energy supply equipment (3) in such a way that the total energy needs of the production system (1) is at a minimum.

6. Method according to at least one of the preceding claims, **characterized in that** the energy control unit (6) determines the energy needs dependent upon outside temperatures of the supply equipment (3) for each medium and period, determines excess energy for each medium and period from a previously planned sequence of execution of the work orders for each machine (2) and corrects these previously planned work series of the work orders in such a way that the total energy needs of the production system (1) is at a minimum.

7. Method according to at least one of the preceding claims, **characterized in that** the energy control unit (6) performs a check-up whether the values to be expected for the energy needs for the coverage respectively shortage periods differ by more than five percent when using the connections of the elements of the production system (1), determines an additional media-specific energy storage unit (10) for such conditions and is integrated into the structure conditions with a minimal length of the media line.

8. Method according to claim 7, **characterized in that** the energy storage unit (10) is connected with a energy conversion unit (11), in which the stored energy is converted to another type of energy.

9. Device for implementing a method of at least one of the preceding claims for reducing the energy input when operating a production system (1) consisting of machines (2) and supply equipment (3) with determinable energy demand and energy planning units (4) for work orders to be implemented by the machines (2), wherein the device comprises an energy control unit (6), being in contact by means of data lines or control lines with the elements of the production system (1), energy relevant parameters of the machines (2) by the energy control unit (6) are continuously determinable and are assignable to representative load spectra, which are classes of operating states of the machines (2), on average expected energy recovery values are assigned to these load spectra media-dependently, wherein the media are electricity, liquid or gaseous media, and the energy control unit (6) is connected with an energy planning unit (4) of the production system (1) and/or an energy control unit of a power station on a wireless basis and/or by an internal network and/or the internet,
**characterized in that**
the elements of the production system (1) are connectable according to a scheme generated by the energy control unit (6) and these connections are separable by the energy control unit (6) by means of isolating equipments,
the energy needs of each appropriate machine for implementing a work order by the respective time units of the load spectra, which are determined based on time periods for work order and machine combination, are determinable by the energy control unit (6), and
the work orders of the machine (2), which shows lowest energy needs value in comparison to other machines (2) are assignable by the energy control unit (6) and/or the planning unit (4).

10. Device according to claim 9, **characterized in that** the machines (2) and the supply equipment (3) are connected by media lines comprising shut-off valves (13, 15) forming a media-dependent connection structure.

11. Device according to claim 10, **characterized in that** for conditions, at which the values to be expected for the energy needs for coverage respectively shortage periods differ by more than five percent when using the connections of the elements of the production system (1), determines an additional media-specific energy storage unit (10) and is integrated into the structure conditions with a minimal length of the media line.

12. Device according to claim 10 or 11, **characterized in that** the media-dependent connection structure includes an energy conversion unit (11).

## Revendications

1. Procédé destiné à la réduction de l'utilisation d'énergie lors de l'opération d'un système de production (1), composé de machines (2) et d'un équipement d'alimentation (3) dont les besoins énergétiques peuvent être déterminés et qui comprennent de systèmes de planification (4) pour les ordres de production destinés à être mis en oeuvre par les machines (2),
des paramètres des machines (2) qui sont pertinents du point de vue énergétique sont déterminés par une unité de gestion de l'énergie (6) étant en liaison avec les éléments du système de production (1) à l'aide de câbles de données ou de câbles de commande et sont classés en collectifs de charge représentatifs, qui sont des catégories d'états de fonctionnement des machines (2),
des valeurs de récupération de l'énergie à escompter en moyenne en fonction des médias sont associées à ces collectifs de charge, dans lesquels les médias en question sont de l'électricité, des médias liquides ou des médias à l'état gazeux,
l'unité de gestion de l'énergie (6) est reliée à un moyen de planification (4) du système de production (1) et/ou à un moyen de contrôle de l'énergie d'une centrale électrique sans fil et/ou est reliée par l'intermédiaire d'un réseau interne et/ou par Internet et
les tranches temporelles respectives des collectifs de charge sont déterminées par le moyen de planification (4) en fonction des périodes pour un ordre de production et une combinaison de machines,
**caractérisé en ce que**
- les éléments du système de production (1) sont reliés selon un schéma émis par l'unité de gestion de l'énergie (6) et ces liaisons sont séparées par l'unité de gestion de l'énergie (6) à l'aide de moyens de blocage,
- l'unité de gestion de l'énergie (6) calcule, à partir des tranches temporelles respectives des collectifs de charge, qui sont déterminés en fonction des périodes pour un ordre de production et une combinaison de machines, le besoins énergétique de chaque machine adéquate en vue de la mise en oeuvre d'un ordre de production, et
- l'unité de gestion de l'énergie (6) et/ou le moyen de planification (4) attribuent les ordres de production à la machine (2), laquelle présente la plus petite valeur pour les besoins énergétiques par rapport à d'autres machines (2).

2. Procédé selon la revendication 1, **caractérisé en ce que** les besoins énergétiques des entraînements, des pressions de médias devant être mis en oeuvre ou des débits volumétriques de médias, ainsi que des températures devant être régulées sont calculés comme étant des paramètres de machines (2) pertinents du point de vue énergétique.

3. Procédé selon la revendication 1 ou 2, **caractérisé en ce que** l'unité de gestion de l'énergie (6) enregistre les besoins énergétiques calculés de chaque machine (2) en vue de la mise en oeuvre d'un ordre de production et forme à partir de cela une séquence de priorité correspondant aux dépenses en énergie respectivement calculées.

4. Procédé selon au moins l'une des revendications précédentes, **caractérisé en ce que**
des périodes avec des ordres de production du système de production (1) qui requièrent beaucoup d'énergie sont déterminées par l'unité de gestion de l'énergie (6) ou par le moyen de planification (4), et une compensation des coûts énergétiques qui dépend des périodes est réalisée avec une unité de planification énergétique (7), et
à la suite de quoi, l'unité de gestion de l'énergie (6) ou le moyen de planification (4) pilote la séquence temporelle de traitement des ordres de production de telle sorte que les ordres de production qui requièrent beaucoup d'énergie sont planifiés durant des périodes où les coûts énergétiques sont faibles.

5. Procédé selon au moins l'une des revendications précédentes, **caractérisé en ce que** les besoins énergétiques de l'équipement d'alimentation (3) qui dépendent des températures extérieures sont déterminés par l'unité de gestion de l'énergie (6) pour chaque média et pour chaque période, les excédents d'énergie sont calculés, pour chaque média et pour chaque période, à partir d'une séquence de traitement préalablement planifiée des ordres de production pour chaque machine (2), et un échange d'énergie spécifique aux médias est effectué entre les machines (2) et/ou entre les machines (2) et l'équipement d'alimentation (3) de façon à ce que les besoins totaux en énergie du système de production (1) restent à un seuil minimal.

6. Procédé selon au moins l'une des revendications précédentes, **caractérisé en ce que** les besoins énergétiques de l'équipement d'alimentation (3) qui dépendent des températures extérieures sont déterminés par l'unité de gestion de l'énergie (6) pour chaque média et pour chaque période, les excédents d'énergie sont calculés, pour chaque média et pour chaque période, à partir d'une séquence de traitement préalablement planifiée des ordres de production pour chaque machine (2) et cette unité de gestion de l'énergie corrige des séquences de traitement préalablement planifiées des ordres de production de façon à ce que les besoins totaux en énergie du système de production (1) restent à un seuil minimal.

7. Procédé selon au moins l'une des revendications précédentes, **caractérisé en ce qu'**une vérification est réalisée par l'unité de gestion de l'énergie (6) afin de déterminer si, lors de l'utilisation des liaisons des éléments du système de production (1), les valeurs à escompter pour les besoins énergétiques diffèrent de plus de cinq pour cent durant des périodes de couverture excédentaire, respectivement durant des périodes de couverture insuffisante, si une unité de stockage de l'énergie (10) supplémentaire et spécifique aux médias est déterminée pour de tels rapports et si elle est intégrée dans les rapports de l'agencement avec une longueur minimale de la canalisation de média.

8. Procédé selon la revendication 7, **caractérisé en ce que** l'unité de stockage de l'énergie (10) est reliée à un moyen de conversion de l'énergie (11), au sein duquel l'énergie stockée est convertie en une autre forme d'énergie.

9. Dispositif destiné à la réalisation d'un procédé selon au moins l'une des revendications précédentes et destiné à la réduction de l'utilisation d'énergie lors de l'opération d'un système de production (1), composé de machines (2) et d'un équipement d'alimentation (3) dont les besoins énergétiques peuvent être déterminés et qui comprennent de systèmes de planification (4) pour les ordres de production destinés à être mis en oeuvre par les machines (2),
dans lequel le dispositif présente une unité de gestion de l'énergie (6) qui est en liaison avec les éléments du système de production (1) à l'aide de câbles de données ou de câbles de commande, des paramètres des machines (2) qui sont pertinents du point de vue énergétique peuvent être collectés en continu au moyen de l'unité de gestion de l'énergie (6) et des collectifs de charge représentatifs, qui sont des catégories d'états de fonctionnement des machines (2), peuvent être associés au moyen de l'unité de gestion de l'énergie, des valeurs de récupération de l'énergie à escompter en moyenne en fonction des médias étant associées à ces collectifs de charge, dans lequel les médias en question sont de l'électricité, des médias liquides ou des médias à l'état gazeux, et l'unité de gestion de l'énergie (6) est reliée à un moyen de planification (4) du système de production (1) et/ou à un moyen de contrôle de l'énergie d'une centrale électrique sans fil et/ou est reliée par l'intermédiaire d'un réseau interne et/ou par Internet,
**caractérisé en ce que**
- les éléments du système de production (1) peuvent être reliés selon un schéma émis par l'unité de gestion de l'énergie (6) et ces liaisons peuvent être séparées par l'unité de gestion de l'énergie (6) à l'aide de moyens de blocage,
- le besoins énergétique de chaque machine adéquate en vue de la mise en oeuvre d'un ordre de production peuvent être calculés au moyen de l'unité de gestion de l'énergie (6), à partir des tranches temporelles respectives des collectifs de charge, qui sont déterminés en fonction des périodes pour un ordre de production et une combinaison de machines, et
- les ordres de production de la machine (2) qui présente la plus petite valeur pour le besoins énergétique par rapport à d'autres machines (2) peuvent être associés par l'intermédiaire de l'unité de gestion de l'énergie (6) et/ou du moyen de planification (4).

10. Dispositif selon la revendication 9, **caractérisé en ce que** les machines (2) et l'équipement d'alimentation (3) sont reliés entre eux par des canalisations de médias présentant des soupapes d'arrêt (13, 15), en formant une structure de liaison qui dépend des médias.

11. Dispositif selon la revendication 10, **caractérisé en ce que** pour des rapports, pour lesquels, lors de l'utilisation des liaisons des éléments du système de production (1), les valeurs à escompter pour les besoins énergétiques diffèrent de plus de cinq pour cent durant des périodes de couverture excédentaire, respectivement durant des périodes de couverture insuffisante, une unité de stockage de l'énergie (10) supplémentaire et spécifique aux médias est déterminée et est intégrée dans les rapports de l'agencement avec une longueur minimale de la canalisation de média.

12. Dispositif selon la revendication 10 ou 11, **caractérisé en ce qu'**un moyen de conversion de l'énergie (11) est intégré dans la structure de liaison qui dépend des médias.
